# EUROPEAN PATENT SPECIFICATION

(11) **EP 2 168 687 B1**
(45) Date of publication and mention of the grant of the patent: **13.04.2011**
(21) Application number: 08165391.7
(22) Date of filing: 29.09.2008
(51) Int. Cl.: B05B 12/14, F16K 27/00, G05B 19/44

(54) **Color change valve assembly with sensors**
Farbwechselventilanordnung mit Sensoren
Ensemble de vanne de changement de couleur doté de capteurs

(43) Date of publication of application: 31.03.2010
(73) Proprietor: ABB AS, 1396 Billingstad (NO)
(72) Inventor: Søyland, Svein, NO-4355, Kverneland (NO)
(74) Representative: Kock, Ina

(56) References cited:
- EP-A- 0 979 964
- EP-A- 1 361 382
- US-A1- 2003 118 392

## Description

### TECHNICAL AREA

The present invention relates to an apparatus and a system for color change to be used in industrial automated painting or coating systems.

### TECHNICAL BACKGROUND

In many spray paint systems for industrial products, for example, automobile production, an automatic paint spraying apparatus is generally employed to paint products on the assembly line. This paint spraying apparatus includes a color change means which allows the apparatus to spray more than one color of paint and to switch quickly between spraying different colors.

In the present invention, the color change means refers to a paint transfer-valve device for connecting a number of paint lines for coating material of different, selectable paints with an application element.

The color change means or paint transfer valve device or paint/color changer, make a rapid switching from one paint color to another paint color possible. The color changer consists of a number of controllable paint valves which are distributed along a paint conduit carrying all paints.

The color change means changing between a number of selectable paints. The color changer are designed in a block construction with individual modules (connection blocks, connection strips, control heads) which can be lined up together, so that a variable, subsequently enlargeable or reducible number of connections for paint lines can be obtained. In addition to the paint valves, usually other, similarly constructed valves are provided for rinsing media, such as thinner fluids and pulsed air.

The type of color changer is known in the art and for example, US 2003/0118392 describes one variant. The flow of a color is controlled by a pneumatic valve and the pressurized air driving the pneumatic valves are controlled by pilot valves on the color changer.

The electrical paint control system sends a signal to the pilot valve to open/close i.e. the pilot valve transforms the electrical signal from the paint control system to a pneumatic signal. The pneumatic signal is used to open/close the actual paint valve.

In the color changers known from US 2003/0118392, the opening an closing of paint valves are open loop i.e. no feedback is given to the control system about the actual status of the paint valves. There is no way to know if operation of the paint valves fail without visual inspection. The paint valves can fail to open and they can fail to close which is defined as a error state for the valve i.e. the valve fail to switch to the state required by the control system.

If a paint valve fail to open the object being painted will fail to be painted and this will hopefully be discovered at the object leaves the paint booth.

If the paint valve fails to close and another paint valve is opened the paints will mix and the object that is painted will be painted by a color mix and the painted object will probably have to be discarded with large costs for the manufacturer. Other consequences with having two valves open at the same time is that there is a risk that one of the paints will be pushed into the other paint's supply tank and thereby contaminate the complete paint supply tank. This paint supply tank is typically 1000 liter and the contamination will result in a major cost for the end customer.

Having a pilot valve control the pneumatically actuated valves on the color changer does solve a number of problem with control of the pneumatic signals it still have problems.

The solution presented in US 2003/0118392 reduces the power needed to operate the valve by replacing a directly operated needle valve with an electromagnetic pilot valve. But the power needed for operating the electromagnetic pilot valve is still in the range of a few Watts. This power in the electromagnetic pilot valve might pose a risk if the color changer is to be operated in an explosion hazardous environment. There are ways to make the electromagnet valve explosion proof but it would be preferable to have a valve that need only a fraction of that energy which would make the valve inherently explosion proof.

EP0979964 and EP1361382 disclose a painting installation comprising a valve with a sensor for sensing a valve needle position, and an external control system receiving a closed loop signal indicating the valve state.

### SUMMARY OF THE INVENTION

The preferred embodiment of the present invention is a color changer apparatus to be used with industrial automated painting or coating equipment. The actual status of color change valves (open or closed) are sensed by sensors (one for each valve) and the valve status are communicated to the color change control system. The speed of status change of the valve can also be sensed and communicated to the color change control system. The color change control system can communicate with the top level control system for the paint robot for example indicating the need for a emergency stop because the failure of a valve to poen an close or that there is a need to schedule a maintenance since some parameters have been exceeded.

The preferred embodiment of the present invention is an industrial automated painting system with a color changer device for connecting a number of lines of selectable liquids with an applicator, wherein each of said lines is provided with a controllable valve for connecting the line to the applicator, and said device comprises a control unit for generating control signals for actuating said controllable valves. The controllable valves are adapted with sensing means (5) for sensing the state of the controllable valves and adapted to communicate (11) the valve state to the control unit and the control unit is configured to monitor operation (e.g. opening or closing) of said controllable valves based on comparing the sensed states of the controllable valves with the control signals for actuating the controllable valves.

In this embodiment of the present invention the a color changer apparatus senses the actual status of color change valves (open or closed) by arranging sensors, one for each valve, and the valve status are communicated to the color change control system. The speed of status change of the valve can also be sensed and communicated to the color change control system.

Another embodiment of the present invention is that the controllable valves are actuated by compressed gas from a common compressed gas line leading through the color changer device to each the controllable valve.

Another embodiment of the present invention is that the color changer device is arranged with pilot valve units that control the flow of compressed gas used to actuate the controllable valves.

Another embodiment of the present invention is that the pilot valve units that control the flow of compressed gas used to actuate the controllable valves are piezo mechanical valves

A piezo mechanical valve is also known as solenoid valve and is a valve that uses the piezo electric effect to e.g. to drive a valve member.

Another embodiment of the present invention is that the pilot valve units (8) that control the flow of compressed gas used to actuate the controllable valves are MEMS valves

Micro-Electro-Mechanical Systems (MEMS) is the integration of mechanical elements, sensors, actuators, and electronics on a common silicon substrate through micro-fabrication technology. While the electronics are fabricated using integrated circuit (IC) process sequences (e.g., CMOS, Bipolar, or BICMOS processes), the micromechanical components are fabricated using compatible "micromachining" processes that selectively etch away parts of the silicon wafer or add new structural layers to form the mechanical and electromechanical devices.

Another embodiment of the present invention is that the pilot valve units (8) are directly actuated by the electrical signal from the control unit.

Another embodiment of the present invention is that the sensing means (5) are arranged to determine the valve state by any of the following methods; magnetic, electric, optical, mechanical.

Another embodiment of the present invention is that if the difference in time between a change of control signal for actuating a controllable valve and a change of state of said controllable valves exceeds a predetermined time (Tw) the control unit indicates a valve warning state.

Another embodiment of the present invention is that if the difference in time between a change of control signal for actuating a controllable valve and a change of state of said controllable valves exceeds a predetermined time (Te) the control unit indicates a valve error state.

Another embodiment of the present invention is that the control unit (7) is arranged to stop the painting process if a valve error state is detected.

Another embodiment of the present invention is that the control unit (7) is arranged to determine if one or more valves have a reached a valve warning state a predetermined number of times (Nw) and indicate that it is time for maintenance of the color changer device.

Another embodiment of the present invention is that the control unit (7) is arranged to indicate that it is time for maintenance if the difference in time between a change of control signal for actuating a controllable valve and a change of state of said controllable valves increases over time.

T0 is the standard reaction time for a controllable valve and it can be in the order of 25-40 milliseconds but this is dependent on the arrangement and the type of valve. For a slow controllable valve (but still acceptable) the reaction time is in the order of 100 milliseconds and this is the normal reaction time for a valve with a 10m hose and somewhat slow response time for a valve with a 0,5m hose. A valve that has a longer reaction time than 300 milliseconds will likely produce products that are not acceptable. The system has different pre-set or user defined times (Tw, Te) that can trigger alarms if the difference in time between a change of control signal for actuating a controllable valve and a change of state of said controllable valve exceeds these times. The values of Tw and Te can be set by the operator and depend on the arrangement and the type of valve.

Tw is the warning time i.e. if the time it takes for the valve to change is longer that this, a valve warning state is generated in the control unit. These states are stored and when a number of them exceeds a system or user defined limit (Nw) the control unit for the color changer can indicate to the robot control system that there is a need to schedule a maintenance or exchange of the color changer valves.

Te is the error time i.e. if the time it takes for the valve to change is longer that this, a valve error state is generated in the control unit and this state can be programmed to stop the painting robot operation.

The relationship between times is T0 < Tw < Te.

Another embodiment of the present invention is that the control unit is arranged to stop the painting process if the error state detected by the control unit is that a controllable valve fails to open or close

Another embodiment of the present invention is that the control unit is arranged to indicate that it is time for maintenance if the error state detected by the control unit is that the reaction time between the control signal and the detected change of valve state of a controllable valve increases over time or goes above a threshold.

Another embodiment of the present invention is that the control unit is arranged with a diagnostic program that actuates each controllable valve and determines the reaction time between the control signal and the detected change of valve state during maintenance, and the diagnostic program can determine if the operation of the color changer device is acceptable.

Another embodiment of the present invention is that the color changer device is modularized.

Another embodiment of the present invention is that the paint transfer-valve device is modularized.

The flow of colors is controlled by pneumatic color change valves and the pressurized air driving the pneumatic valves are controlled by pizo electric valves or MEMS valve which are controlled by a color change control system.

With this invention it is possible for the control system to monitor all valves and shut down production if more than one valve is open at the same time.

It is possible to monitor response/switching time of the color change valves during operation and to give a warning if the response/switching time increases and indicate if a color change valve needs to be replaced in the near future or immediately or if the pilot valve needs to be replaced.

During maintenance it is possible to run a diagnostic program that actuates each valve in a sequence and automatically check that each valve operates correctly.

The sensing means used to sense the position or state of the controllable valves can operate with a number of different technologies.

The sensors can use the change of a magnetic field e.g. sensing the placement of a magnet on the controllable color change valve.

The sensors can use the change of an electric current e.g. using the position/state of the controllable valve to open or close an electric circuit.

The sensor can be electro-mechanic e.g. the position of the controllable color change valve moves a detection means that then sends a signal to the control system.

The sensor can be optic e.g. the position of the controllable valve (open or closed) blocs/unblocks an optic path.

The main advantage of using pizo electric pilot valves or MEMS pilot valves to control the pressurized air flow controlling the pneumatic color change valves are the low energy consumption of these valves. The energy consumption of pizo electric valves or MEMS valves are just a fraction of the energy consumption of an electromagnetic pilot valve. The power needed to operate pizo electric valves or MEMS valves are in the order of milli-Watts (mW) which is several orders of magnitude less that the power used to operate the electromagnetic pilot valve.

The low energy consumption of the pizo electric valves or MEMS valves makes it very easy to design color changer system according to EX (explosion security) regulations. Ensuring that industrial automated painting or coating equipment has an EX proof design is important since the equipment is operated in an environment where the equipment is surrounded by paint droplets, solvent vapors and/or powders.

Another advantage of using pizo-electric valve or MEMS valve is the much faster response time and higher accuracy for these valves compared to electromagnetic pilot valve.

Yet another advantage of pizo-electric valve or MEMS valve is that they can be actuated directly from data signal without the need for an amplifier or a relay. This will furthermore simplify the design and reduce the number of components needed in the color changes system and increase the explosion safety.

A further advantage of using piezo-electric valve or MEMS valve is that they have less moving parts compared to electromagnetic pilot valve. Piezo-electric valve or MEMS valve are also known to be more reliable than an electromagnetic pilot valve.

### BRIEF DESCRIPTION OF THE DRAWINGS

The invention will be elucidated by reference to an embodiment partially illustrated in the drawings.
Figure 1 illustrates schematically how the transfer-valve device for controlling the flow from one paint line is controlled.
Figure 2 shows a transfer-valve device
Figure 3 shows a cross-section of a transfer-valve device
Figure 4 shows another cross-section of a transfer-valve device

### DETAILED DESCRIPTION OF THE EMBODIMENTS

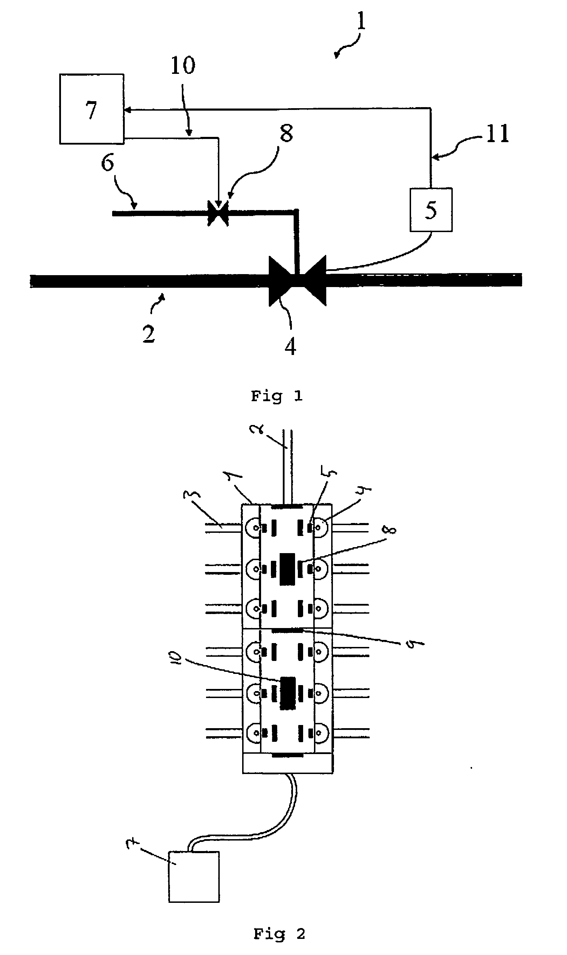

Figure 1 illustrates schematically the how the flow of paint is controlled in a paint transfer-valve device or color change assembly 1. The paint line 2 is controlled by a color change valve 4. The color change valve 4 is opened and closed by using pressurized air 6. The opening and closing of pressurized air is controlled by a pilot valve 8. The pilot valve 8 is controlled by a signal 10 from an external electronic control system 7. The sensor 5 senses the status of the color change valve 4 and communicates 11 the status of the color change valve 4 to the external electronic control system 7.

Figure 2 shows a paint transfer-valve device or color change assembly 1. The selected paint is transported through a common paint channel 2 from the color change assembly 1 to the applicator. Different paint lines or cleaning medium lines 3 are attached to the color change assembly 1. For the selected paint a pneumatic operated valve or controllable valve 4 is opened and the other paint line valves are closed. At color change the open paint valve 4 is closed and possibly a sequence of valves are opened and closed for solvent and/or air to clean the common paint channel 2 from the remaining previous color. A sensor 5 is arranged on the paint transfer-valve device to monitor the position or status of the controllable valve 4. A control system 7 controls the pilot valves 8 that control the flow of air from common channel for compressed gas supply 6. The compressed air operates the pneumatic operated valve 4. The color changer is built up from modules and the modules are electrically connected 9. The modules that make the transfer-valve device are also pneumatically connected 9. Each color change module is adapted with an I/O unit 10 with electrical connection to sensor 5 and pilot valves 8 and controlled by the control system 7 via bus system.

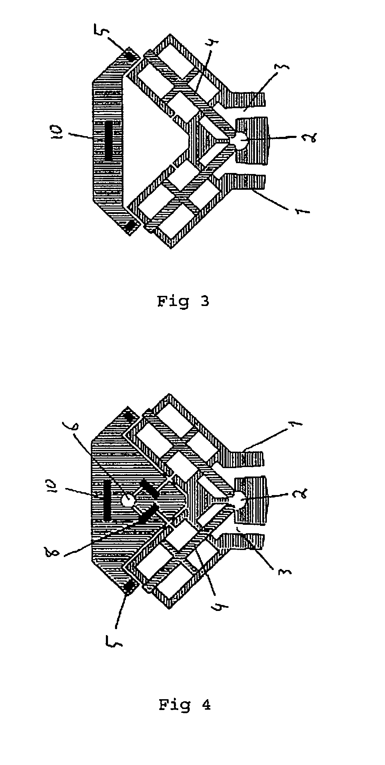

Figure 3 shows a cross-section of a transfer-valve device or color change assembly 1. The description of the numbers is the same as in figure 2. In this figure one can see the arrangement of the common paint channel 2, the paint lines or cleaning medium lines 3, pneumatic operated valve or controllable valve 4 and sensor 5.

Figure 4 shows another cross-section of a transfer-valve device or color change assembly 1. In this figure one can see the arrangement of the common paint channel 2, the paint lines or cleaning medium lines 3, pneumatic operated valve or controllable valve 4 and sensor 5. A common channel for compressed gas supply 6 for driving the controllable valve 4. The pilot valves 8, that can be a piezo-electric valve or a MEMS valve control the flow of compressed gas to the controllable valves 4. The color change module 1 is adapted with an I/O unit 10 with electrical connection (not shown) to sensor 5 and pilot valves 8 and controlled by the control system 7 via bus system.

While the invention has been described in connection with a preferred embodiment, it is not intended to limit the scope of the invention to the particular form set forth, but on the contrary, it is intended to cover such alternatives, modifications, and equivalents as may be included within the scope of the invention as defined by the appended claims.

## Claims

1. An industrial automated painting system with a color changer device (1) for connecting a number of lines (3) of selectable liquids with an applicator, wherein each of said lines (3) is provided with a controllable valve (4) for connecting the line (3) to the applicator, and said color changer device (1) comprises a control unit (7) for generating control signals (10) for actuating said controllable valves (4),
said controllable valves (4) being adapted with sensing means (5) for sensing the state of said controllable valves (4) and adapted to communicate (11) said valve state to said control unit (7) and said control unit (7) is configured to monitor operation of said controllable valves (4) based on comparing the sensed states of the controllable valves (4) with the control signals for actuating the controllable valves (4),
**characterized in that**
if a difference in time between a change of control signal for actuating a controllable valve (4) and a change of state of said controllable valves (4) exceeds a predetermined time the control unit (7) generates an alarm.

2. An industrial automated painting system according to claim 1 **characterized in that** said controllable valves (4) are actuated by compressed gas from a common compressed gas line (6) leading through the color changer device (1) to each said controllable valve.

3. An industrial automated painting system according to claim 2 **characterized in that** said color changer device is arranged with pilot valve units (8) that control the flow of compressed gas used to actuate said controllable valves (4).

4. An industrial automated painting system according to claim 3 **characterized in that** the pilot valve units (8) that control the flow of compressed gas used to actuate said controllable valves are piezo mechanical valves

5. An industrial automated painting system according to claim 3 **characterized in that** the pilot valve units (8) that control the flow of compressed gas used to actuate said controllable valves are MEMS valves

6. An industrial automated painting system according to any of the claims 3-5 **characterized in that** said pilot valve units (8) are directly actuated by the electrical signal from the control unit.

7. An industrial automated painting system according to any of the claims 1-6 **characterized in that** said sensing means (5) are arranged to determine the valve state by any of the following methods; magnetic, electric, optical, mechanical.

8. An industrial automated painting system according to any of the claims 1-7 **characterized in that** if the difference in time between a change of control signal for actuating a controllable valve and a change of state of said controllable valves exceeds a first predetermined time Tw the control unit indicates a valve warning state.

9. An industrial automated painting system according to any of the claims 1-7 **characterized in that** if the difference in time between a change of control signal for actuating a controllable valve and a change of state of said controllable valves exceeds a second predetermined time Te the control unit indicates a valve error state.

10. An industrial automated painting system according to claim 9 **characterized in that** said control unit (7) is arranged to stop the painting process if a valve error state is detected.

11. An industrial automated painting system according to claim 8 **characterized in that** said control unit (7) is arranged to determine if one or more valves have a reached a valve warning state a predetermined number of times and indicate that it is time for maintenance of the color changer device.

12. An industrial automated painting system according to any of the claims 1-11 **characterized in that** said control unit (7) is arranged to indicate that it is time for maintenance if the difference in time between a change of control signal for actuating a controllable valve and a change of state of said controllable valves increases over time.

13. An industrial automated painting system according to any of the claims 1-12 **characterized in that** said control unit is arranged with a diagnostic program that actuates each controllable valve and determine the reaction time between the control signal and the detected change of valve state during maintenance, and said diagnostic program can determine if the operation of the color changer device is acceptable.

14. An industrial automated painting system according to any of the claims 1-13 **characterized in that** said color changer device is modularized.

15. An industrial automated painting system according to claim 14 **characterized in that** said paint transfer-valve device is modularized.

## Patentansprüche

1. Industrielles automatisiertes Lackiersystem mit einer Farbwechselvorrichtung (1) zum Verbinden einer Anzahl von Leitungen (3) für wählbare Flüssigkeiten mit einem Auftragungsgerät, worin jede der Leitungen (3) mit einem steuerbaren Ventil (4) zum Verbinden der Leitung (3) mit dem Auftragungsgerät versehen ist und die besagte Farbwechselvorrichtung (1) eine Steuereinheit (7) zum Erzeugen eines Steuersignals (10) zum Betreiben der steuerbaren Ventile (4) umfasst und die besagten steuerbaren Ventile (4) mit Sensoren zum Erfassen des Status der steuerbaren Ventile der ausgelegt sind , die so ausgestaltet sind, dass sie den besagten Ventilstatus an die Steuereinheit (7) übermitteln (11) und die Steuereinheit (7) so konfiguriert ist, dass sie die Funktion der steuerbaren Ventile (4) basierend auf dem Vergleich des ermittelten Status der steuerbaren Ventile (4) mit dem Steuersignal für das Betreiben der steuerbaren Ventile (4) überwacht,
**dadurch gekennzeichnet, dass**
in dem Fall, dass eine Zeitdifferenz zwischen einem Wechsel des Steuersignals zum Betreiben des steuerbaren Ventils (4) und dem Status des steuerbaren Ventils (4) einen vorher bestimmten Zeitraum überschreitet, die Steuereinheit (7) ein Warnsignal erzeugt.

2. Industrielles automatisiertes Lackiersystem gemäß Anspruch 1, **dadurch gekennzeichnet, dass** besagte steuerbare Ventile (4) durch komprimiertes Gas aus einer gemeinsamen Gasleitung (6), die durch die Farbwechselvorrichtung (1) zu jedem der steuerbaren Ventile führt, betrieben werden.

3. Industrielles automatisiertes Lackiersystem gemäß Anspruch 2, **dadurch gekennzeichnet, dass** besagte Farbwechselvorrichtung mit Vorsteuerventileinheiten (8) versehen ist, die den Fluss des komprimierten Gases, das zum Betreiben der steuerbaren Ventile (4) eingesetzt wird, steuern.

4. Industrielles automatisiertes Lackiersystem gemäß Anspruch 3, **dadurch gekennzeichnet, dass** die Vorsteuerventileinheiten (8), die den Fluss des komprimierten Gases, das zum Betreiben der steuerbaren Ventile eingesetzt wird, steuern, piezo-mechanische Ventile verkörpern.

5. Industrielles automatisiertes Lackiersystem gemäß Anspruch 3, **dadurch gekennzeichnet, dass** die Vorsteuerventileinheiten (8), die den Fluss des komprimierten Gases, das zum Betreiben der steuerbaren Ventile eingesetzt wird, steuern, MEMS-Ventile verkörpern.

6. Industrielles automatisiertes Lackiersystem gemäß einem der Ansprüche 3 - 5, **dadurch gekennzeichnet, dass** die Vorsteuerventileinheiten (8) direkt durch ein elektrisches Signal aus der Steuereinheit betrieben werden.

7. Industrielles automatisiertes Lackiersystem gemäß einem der Ansprüche 1 - 6, **dadurch gekennzeichnet, dass** besagte Sensoren (5) so ausgestaltet sind, dass sie den Status des Ventils durch jede der nachfolgenden Methoden ermitteln können: magnetisch, elektrisch, optisch, mechanisch.

8. Industrielles automatisiertes Lackiersystem gemäß einem der Ansprüche 1 - 7, **dadurch gekennzeichnet, dass** im Falle die Zeitdifferenz zwischen einem Wechsel des Steuersignals zum Betreiben eines steuerbaren Ventils und dem Statuswechsel des besagten steuerbaren Ventils einen ersten vorher bestimmten Zeitraum Tw überschreitet, die Steuereinheit einen Ventil-Warnstatus anzeigt.

9. Industrielles automatisiertes Lackiersystem gemäß einem der Ansprüche 1 - 7, **dadurch gekennzeichnet, dass** im Falle die Zeitdifferenz zwischen einem Wechsel des Steuersignals zum Betreiben eines steuerbaren Ventils und dem Statuswechsel des besagten steuerbaren Ventils einen zweiten vorher bestimmten Zeitraum Te überschreitet, die Steuereinheit einen Ventil-Fehlerstatus anzeigt.

10. Industrielles automatisiertes Lackiersystem gemäß Anspruch 9, **dadurch gekennzeichnet, dass** die Steuereinheit (7) so ausgestaltet ist, dass sie den Lackierprozess stoppt, falls ein Ventil-Fehlerstatus ermittelt wurde.

11. Industrielles automatisiertes Lackiersystem gemäß Anspruch 8, **dadurch gekennzeichnet, dass** die Steuereinheit (7) so ausgestaltet ist, dass sie ermittelt, ob ein oder mehrere Ventile eine vorherbestimmte Anzahl von Malen einen Ventil-Warnstatus erreicht haben und anzeigt, dass es an der Zeit für eine Wartung der Farbwechselvorrichtung ist.

12. Industrielles automatisiertes Lackiersystem gemäß einem der Ansprüche 1 - 11, **dadurch gekennzeichnet, dass** die Steuereinheit (7) so ausgestaltet ist, dass sie anzeigt, dass es an der Zeit für eine Wartung ist, wenn die Zeitdifferenz zwischen einem Wechsel des Steuersignals für das Betreiben eines steuerbaren Ventils und einem Wechsel des Status des besagten steuerbaren Ventils im Laufe der Zeit ansteigt.

13. Industrielles automatisiertes Lackiersystem gemäß einem der Ansprüche 1 - 12, **dadurch gekennzeichnet, dass** die besagte Steuereinheit mit einem Diagnose-Programm ausgestattet ist, welches jedes steuerbare Ventil betreibt und die Reaktionszeit zwischen dem Steuersignal für das Betreiben des steuerbaren Ventils und dem festgestellten Wechsel des Ventilstatus während der Wartung ermittelt und das Diagnose-Programm ermitteln kann, ob die Funktion der Farbwechselvorrichtung akzeptabel ist.

14. Industrielles automatisiertes Lackiersystem gemäß einem der Ansprüche 1 - 13, **dadurch gekennzeichnet, dass** die Farbwechselvorrichtung modularisiert ist.

15. Industrielles automatisiertes Lackiersystem gemäß Anspruch 14, **dadurch gekennzeichnet, dass** die besagte Lackier-Transfer-Ventilvorrichtung modularisiert ist.

## Revendications

1. Système de peinture industrielle automatisé comportant un dispositif de changement de couleur (1) pour connecter un nombre de conduites (3) de liquides sélectionnables à un applicateur, dans lequel chacune desdites conduites (3) est pourvue d'une vanne réglable (4) pour connecter la conduite (3) à l'applicateur, et ledit dispositif de changement de couleur (1) comprend une unité de commande (7) pour générer des signaux de commande (10) pour actionner lesdites vannes réglables (4),
lesdites vannes réglables (4) étant adaptées avec un moyen de détection (5) pour mesurer l'état desdites vannes réglables (4) et adapté pour communiquer (11) ledit état de vanne à ladite unité de commande (7) et ladite unité de commande (7) est configurée pour surveiller le fonctionnement desdites vannes réglables (4) en se basant sur la comparaison des états mesurés des vannes réglables (4) avec les signaux de commande pour actionner les vannes réglables (4),
**caractérisé en ce que** si une différence dans le temps entre un changement de signal de commande pour actionner une vanne réglable (4) et un changement d'état desdites vannes réglables (4) dépasse un temps prédéterminé, l'unité de commande (7) génère une alarme.

2. Système de peinture industrielle automatisé selon la revendication 1, **caractérisé en ce que** lesdites vannes réglables (4) sont actionnées par du gaz comprimé provenant d'une conduite de gaz comprimé commune (6) conduisant à travers le dispositif de changement de couleur (1) à chacune desdites vannes réglables.

3. Système de peinture industrielle automatisé selon la revendication 2, **caractérisé en ce que** ledit dispositif de changement de couleur est muni d'unités de vannes pilotes (8) qui commandent le débit de gaz comprimé utilisé pour actionner lesdites vannes réglables (4).

4. Système de peinture industrielle automatisé selon la revendication 3, **caractérisé en ce que** les unités de vannes pilotes (8) qui commandent le débit de gaz comprimé utilisé pour actionner lesdites vannes réglables sont des vannes piézomécaniques.

5. Système de peinture industrielle automatisé selon la revendication 3, **caractérisé en ce que** les unités de vannes pilotes (8) qui commandent le débit de gaz comprimé utilisé pour actionner lesdites vannes réglables sont des vannes du type microsystème électromécanique.

6. Système de peinture industrielle automatisé selon l'une quelconque des revendications 3 à 5, **caractérisé en ce que** lesdites unités de vannes pilotes (8) sont actionnées directement par le signal électrique provenant de l'unité de commande.

7. Système de peinture industrielle automatisé selon l'une quelconque des revendications 1 à 6, **caractérisé en ce que** ledit moyen de détection (5) est adapté pour déterminer l'état de vanne par l'une quelconque des méthodes suivantes : magnétique, électrique, optique et mécanique.

8. Système de peinture industrielle automatisé selon l'une quelconque des revendications 1 à 7, **caractérisé en ce que** si la différence dans le temps entre un changement de signal de commande pour actionner une vanne réglable et un changement d'état desdites vannes réglables dépasse un premier temps prédéterminé Tw, l'unité de commande indique un état d'alerte de vanne.

9. Système de peinture industrielle automatisé selon l'une quelconque des revendications 1 à 7, **caractérisé en ce que** si la différence dans le temps entre un changement de signal de commande pour actionner une vanne réglable et un changement d'état desdites vannes réglables dépasse un deuxième temps prédéterminé Te, l'unité de commande indique un état d'erreur de vanne.

10. Système de peinture industrielle automatisé selon la revendication 9, **caractérisé en ce que** ladite unité de commande (7) est adaptée pour arrêter le processus de peinture si un état d'erreur de vanne est détecté.

11. Système de peinture industrielle automatisé selon la revendication 8, **caractérisé en ce que** ladite unité de commande (7) est adaptée pour déterminer si une ou plusieurs vannes ont atteint un état d'alerte de vanne un nombre prédéterminé de fois et indique qu'il est temps d'effectuer une maintenance du dispositif de changement de couleur.

12. Système de peinture industrielle automatisé selon l'une quelconque des revendications 1 à 11, **caractérisé en ce que** ladite unité de commande (7) est adaptée pour indiquer qu'il est temps d'effectuer une maintenance si la différence dans le temps entre un changement de signal de commande pour actionner une vanne réglable et un changement d'état desdites vannes réglables augmente dans le temps.

13. Système de peinture industrielle automatisé selon l'une quelconque des revendications 1 à 12, **caractérisé en ce que** ladite unité de commande est pourvue d'un programme de diagnostic qui actionne chaque vanne réglable et détermine le temps de réaction entre le signal de commande et le changement détecté d'état de vanne pendant la maintenance, et ledit programme de diagnostic peut déterminer si le fonctionnement du dispositif de changement de couleur est acceptable.

14. Système de peinture industrielle automatisé selon l'une quelconque des revendications 1 à 13, **caractérisé en ce que** ledit dispositif de changement de couleur est modularisé.

15. Système de peinture industrielle automatisé selon la revendication 14, **caractérisé en ce que** ledit dispositif de vanne de transfert de peinture est modularisé.
